(19) **Europäisches Patentamt / European Patent Office / Office européen des brevets**

(11) **EP 4 309 118 B1**

(12) **EUROPEAN PATENT SPECIFICATION**

(45) Date of publication and mention
of the grant of the patent:
**25.02.2026  Bulletin 2026/09**

(21) Application number: **21716704.8**

(22) Date of filing: **01.04.2021**

(51) International Patent Classification (IPC):
***G06T 7/00*** *(2017.01)*

(52) Cooperative Patent Classification (CPC):
**G06T 7/0002;** G06T 2207/20081;
G06T 2207/20084; G06T 2207/30168

(86) International application number:
**PCT/EP2021/058649**

(87) International publication number:
**WO 2022/207112 (06.10.2022 Gazette 2022/40)**

(54) **DATA AGNOSTIC SAMPLING AND DIFFERENTIABLE CORRELATION LOSS FUNCTION**

DATENAGNOSTISCHE ABTASTUNG UND DIFFERENZIERBARE
KORRELATIONSVERLUSTFUNKTION

ÉCHANTILLONNAGE NEUTRE DE DONNÉES ET FONCTION DE PERTE DE CORRÉLATION
DIFFÉRENCIABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.01.2024  Bulletin 2024/04**

(73) Proprietor: **Huawei Technologies Co., Ltd.
Longgang
Shenzhen, Guangdong 518129 (CN)**

(72) Inventors:
• **PEREIRA, Jose, Costa
80992 Munich (DE)**
• **LEONARDIS, Ales
80992 Munich (DE)**
• **MCDONAGH, Steven, George
80992 Munich (DE)**
• **THONG, William
80992 Munich (DE)**

(74) Representative: **Isarpatent
Patent- und Rechtsanwälte
Barth Hassa Peckmann & Partner mbB
Friedrichstraße 31
80801 München (DE)**

(56) References cited:
**CN-A- 109 740 667      CN-A- 111 429 402
US-A1- 2016 379 352**

• **MATHIEU BLONDEL ET AL: "Fast Differentiable
Sorting and Ranking", ARXIV.ORG, CORNELL
UNIVERSITY LIBRARY, 201 OLIN LIBRARY
CORNELL UNIVERSITY ITHACA, NY 14853, 30
June 2020 (2020-06-30), XP081686440**
• **ANONYMOUS: "Differentiable Spearman in
PyTorch (Optimize for CORR directly) - Data
Science - Numerai Forum", 11 March 2021
(2021-03-11), pages 1 - 10, XP055870880,
Retrieved from the Internet <URL:https://forum.
numer.ai/t/
differentiable-spearman-in-pytorch-optimize-for-
corr-directly/2287> [retrieved on 20211209]**

EP 4 309 118 B1

**Description**

**FIELD OF THE INVENTION**

This invention relates to mapping from data units, such as an images, to quantitative values. Such values may be used to rank or otherwise compare the data units.

**BACKGROUND**

Successfully mapping from data units, such as images, to quantitative (scalar) values of arbitrary dimension (axis) involves producing a function that takes, as input, a data unit and outputs a scalar value that is representative of some property of the input data unit.

One example of such a function involves perceptual image quality assessment and the quantitative scoring of images, based on their visual quality. Once individual scalars are assigned to images in a set, the images are then rankable, in ordinal fashion, using the respective scores to sort the image list by an arbitrary dimension. In this application, sorting the list using the scalar would result in a list of images, ordered by visual quality.

Taking subjective visual quality as an example of image-to-score mapping, the process of automatically assigning scalars to images, based on qualitative appearance, is commonly known as Image Quality Assessment (IQA).

For this IQA application, a selection of mapping techniques have been developed in order to automatically assess the perceptual visual quality of images. Acceptable automated IQA estimate outputs should typically be highly correlated with quality assessments made by a range of very many human evaluators (commonly referred to as the Mean Opinion Score, MOS). IQA has been widely applied to down-stream computational photography and computer vision problems where image quality constitutes an essential facet, for example image restoration, image super-resolution, and image retrieval. Research on IQA has focused on both the FR-IQA (Full Reference) and NR-IQA (No Reference) settings, the latter being the case where image quality must be established for a (potentially quality deficient) image, without any reference (baseline quality) image available.

Both trainable (learnable) models and deterministic systems may be used to map from images to quantitative evaluation scores.

Trainable models, for example neural networks, use labelled data (image, quantitative score tuple pairs) in conjunction with supervised learning techniques in order to learn a regression function capable of mapping images to respective evaluation scores. Evaluation ratings, in this context, may constitute an arbitrary image attribute.

For example, in IQA, image 'perceptual quality' can be taken as an example attribute. However, subjective image 'perceptual quality' is not a well-defined term in a mathematical sense, resulting in a naturally ill-posed example instance of the mapping problem.

The success and widespread popularity of Convolutional Neural Networks (CNNs) has encouraged research towards exploring their potential application to the IQA problem, amongst many other computer vision tasks. This research into learnable, data-driven methods has resulted in significant improvements compared to previous hand-crafted approaches.

One distinguishing component of such learnable models is their requirement for large training data. Large publicly available datasets for the IQA problem in particular are absent due to the relative expense associated with collection of such datasets (i.e. MOS recording and collation per image is labour and time intensive). Therefore, a critical question that any work considering a data-driven approach to solving the IQA problem must address is the absence of large IQA datasets, usable for model training (function fitting).

Neural network methods, in particular, are especially sensitive to this point as, if models grow deeper and wider (increasing their expressive power and flexibility), the number of internal model parameters increases dramatically and more data are required to avoid the well understood problems associated with 'model overfitting' that typically hurt generalization ability when considering unseen novel test data (i.e. models become more training-data-hungry as the number of parameters increases, potentially resulting in hurting prediction performance). In summary, one disadvantage of previous learnable approaches to IQA is the conflicting nature of data-hungry trainable CNN models and the high cost and high expense of hand-labelling and collecting IQA datasets.

As a consequence of the previously noted data set order of magnitude issues, larger and larger annotated datasets are required for model training. However, as noted, the annotation process for IQA image datasets requires multiple human annotations for every image, and thus collection and collation processes are extremely labor-intensive and costly. Most available IQA datasets are too small to be effective for training CNNs as a result.

It is desirable to develop an approach that overcomes these problems.

CN 109 740 667 A discloses image quality assessment of image categories based on machine learning.

## SUMMARY OF THE INVENTION

The invention is defined in the appended claims.

According to a first aspect there is provided a processing mechanism for assessing a plurality of data units, the processing mechanism comprising one or more processors configured to process the data units by means of a machine learning algorithm and thereby form, for each data unit, an output value representing both (i) a rating for that unit and (ii) a ranking of that unit relative to the other data units of the plurality of data units. This may allow a property of the data units, such as their quality, to be easily compared using the output value.

The data units may represent semantically differing content and the one or more processors may be configured to, as part of the algorithm, select groups of the data units for comparative processing, at least some of the groups comprising data units that represent semantically differing content. The approach may allow for image content agnostic sampling, and therefore down-stream image agnostic quality comparisons, in contrast to typical previous image semantic-content-constrained comparisons.

The machine learning algorithm may operate on multiple batches, each batch comprising a partial set of the data units.

The machine learning algorithm may operate in dependence on a training objective that employs first differentiable correlation coefficients configured to enforce, over a batch, a monotonic relationship between the output value of each member of the batch and its respective rating among the members of that batch. This may allow the differentiable correlation coefficients to be integrated in the loss function. This may allow the model to take a more global view of image set rankings that correlation coefficients measure.

The monotonic relationship may be a linear relationship. This may be a convenient implementation.

The first differentiable correlation coefficients may be Pearson correlation coefficients. This may allow the formulation to be made differentiable.

The machine learning algorithm may operate in dependence on a training objective that employs second differentiable correlation coefficients configured to enforce, over a batch, rank correlation between the output value of each member of the batch and its respective rating among the members of that batch. This may allow the differentiable correlation coefficients to be integrated in the loss function. This may allow the model to take a more global view of image set rankings that correlation coefficients measure.

The second differentiable correlation coefficients may be Spearman correlation coefficients. As the Spearman correlation coefficient relies on an indicator function to compute ranks, it makes the formulation non-differentiable.

In the preferred implementation, the first and second differentiable correlation coefficients make use of first order differentiation.

The data units may be, for example, image files, video files, text files or audio files. The data units may be perceptual data units. The mechanism may therefore be used to rank and compare a variety of types of data units.

The data units may be image files and the ratings may represent image quality. This may allow the processing mechanism to used for image quality assessment.

The image quality may represent one or more of sharpness, contrast, colour balance, blur, noise, haze, software-induced artifacts and subject. This may allow various aspects of the images to be taken into account when assessing the image quality.

According to a second aspect there is provided a computer-implemented method for assessing a plurality of data units, the method comprising forming, by means of a machine learning algorithm, for each data unit, an output value representing both (i) a rating for that unit and (ii) a ranking of that unit relative to the other data units of the plurality of data units. This may allow a property of the data units, such as their quality, to be easily compared using the output value.

According to another aspect there is provided a processing mechanism for assessing a plurality of data units, the processing mechanism comprising one or more processors configured to: receive the plurality of data units, the data units representing differing semantic content; form a plurality of groups of the data units for comparative processing, at least some of the groups comprising data units that represent semantically differing content; and for each group, comparatively process the members of that group by means of a machine learning algorithm to form a rating for each member of that group relative to the other members of that group.

According to a further aspect there is provided a computer program which, when executed by a computer, causes the computer to perform the method described above. The computer program may be provided on a non-transitory computer readable storage medium.

## BRIEF DESCRIPTION OF THE FIGURES

The present invention will now be described by way of example with reference to the accompanying drawings. In the drawings:

Figure 1 shows three images of resolution 64x64. x1 and x2 are two distorted examples coming from the same reference image. y1 and y2 are the ground truth MOS scores, available during model training.

Figure 2 provides a schematic showing how the exemplary perceptual quality algorithm uses network $f$ in order to derive scalar rating $d1$ for image x1.

Figure 3 shows a comparison between the images (ref$^n$, x$^n\_i$) and (ref$^n$, x$^n\_j$), where x$^n\_i$ and x$^n\_j$ originate from the same ref$^n$ image (currently the standard IQA approach).

Figure 4 shows a comparison between the images (ref$^n$, x$^n\_i$) and (ref$^m$, x$^m\_j$) where $n$ and m, as well as $i$ and $j$, can be disparate.

Figure 5 shows a schematic Illustration of a batch fixed with the same pair.

Figure 6 shows a schematic illustration of a batch fixed with any pair.

Figure 7 shows a schematic illustration of a batch all with any pair.

Figure 8 shows a schematic illustration of a batch all with the same reference.

Figure 9 shows a summary of an example of the steps performed as part of a processing mechanism for assessing a plurality of data units.

Figure 10 shows an example of an apparatus configured to implement the method described herein.

## DETAILED DESCRIPTION OF THE INVENTION

Embodiments of the present invention provide a learning-based method capable of assigning quantitative ratings to data units, such as images. In the particular case of images, the rankings can align and correlate well in both FR-IQA and NR-IQA settings.

To instantiate the solution, the IQA problem is taken as an exemplary use case. That is the automated mapping of images to scalar quantitative values, representative of image visual (perceptual) quality. The method described herein can improve performance with respect to the outlined task, over previous approaches that solve this problem.

Here, the data units are perceptual data units in the form of images. The images may be, for example, RGB images or RAW images.

The system is capable of learning a functional mapping from input images to (quantitative, scalar) output scores. The learning process extends well-understood supervised-learning paradigms. In the exemplary case of IQA, data comprising supervised-learning training samples (pairs of [image,rating]) is obtained.

As discussed previously, such training data are generally expensive to collect and require manual labelling effort. Training datasets are therefore typically small in terms of the order of sample-magnitude.

The approach described herein uses an image sampling strategy that leverages training data effectively and taps as much information as possible, from the data, in order to gain all available mileage from small training data sample tuples.

Training time involves using 'pairwise comparisons' between image samples, such that, at test (deploy) time, the learned scoring function need take as input a (single) distorted image and its reference for the FR-IQA setting. For the NR-IQA setting, the learned score function need take as input only a (single) distorted image without any reference. Training is done in a pairwise fashion, with the definition of valid distorted image source.

Embodiments of the present invention include a training image sampling strategy referred to herein as batch all sampling. The crux of the approach relaxes training image sampling constraints in terms of what typically constitutes a 'training image pair'.

The approach allows for image content agnostic sampling, and therefore down-stream image agnostic quality comparisons, in contrast to typical previous image semantic-content-constrained comparisons (see Ekta Prashnani, Hong Cai, Yasamin Mostofi, Pradeep Sen, "PieAPP: Perceptual Image-Error Assessment through Pairwise Preference", Computer Vision and Pattern Recognition, 2018).

As will be described in more detail below, the result is that instead of having N pairs in a training 'batch' for a model, there are instead 'N*N' pairs in theory. In practice, there may be ($N*N-N$)/2 pairs, due to bidirectional redundancies.

This effectively increases the training signal, available to the model from an identical number of original training images (original data size), improving the 'mileage' of available training data.

Improving (increasing) model training signal typically results in better down-stream quality of learned mappings for new, previously unseen images. Further to increasing the number of available comparisons, the 'batch all' sampling strategy computes scores over the entire available training mini-batch, allowing the model to get a more holistic view of image content comparisons (compared to previous content-constrained comparisons). Integrating comparisons without any constraints on content more closely mimics the IQA underlying goal of comparing images, regardless of their semantic content.

For pairwise image comparison, the approach involves leaning a scoring function that, in the FR-IQA application, takes as input a distorted image and its reference. Training is done in a pairwise fashion with two distorted images coming from the same reference.

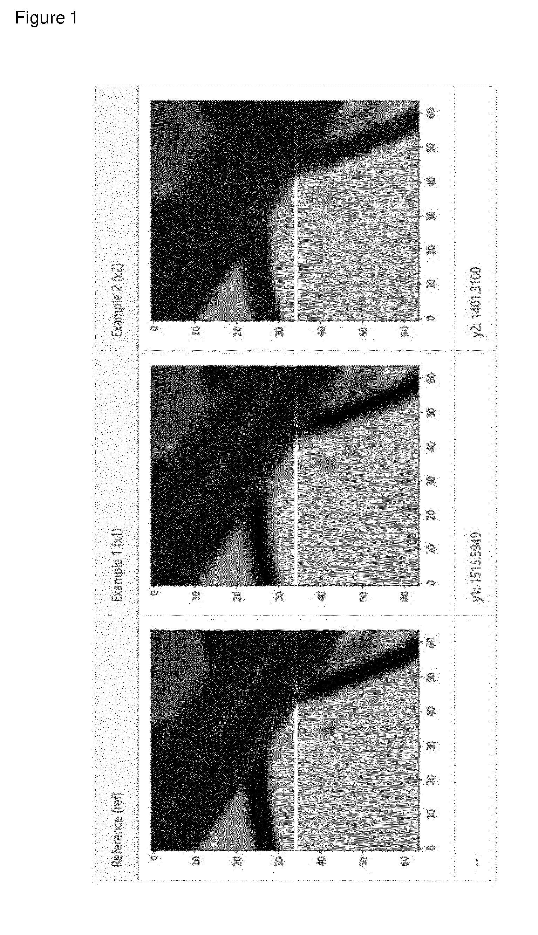

Figure 1 shows three images of resolution 64x64. **x1** and **x2** are two distorted examples coming from the same reference image **(ref)**. **y1** and **y2** are the ground truth MOS scores, available during model training.

In this example, the task is to learn a scoring function $f$ that measures the quality of an image **x** with respect to its reference image, **ref.** The output of the scoring function corresponds to the quality score.

For training, a pairwise comparison is performed between **s1**=$f$(ref,x1) and **s2**=$f$(ref,x2). In the exemplary case above, in that case **s1** should be higher than **s2** because of the ground truth MOS values **y1** > **y2.**

During system deployment (i.e. during test-time inference, after model learning), the pairwise comparison is not necessary, and **s**=$f$(ref,x) can simply be computed.

This particular formulation assumes the access of a reference image during both the training and inference phases. However, the method may also be implemented without a reference image (i.e. in NR-IQA).

Any learning-based, data-driven strategy designed to fit a function capable of mapping data units such as images to scalar values (representing perceptual quality or otherwise) typically requires a loss function. This is the proxy objective that provides a signal to the model based on its current performance during learning and enables it to update its internal parameters towards iterative performance improvement.

This process is commonly understood as 'supervised learning'. Examples of appropriate loss functions leverageable for the task of learning a perceptual quality mapping function will now be described.

In margin-based ranking loss, the objective is to learn which distorted image, **x1** or **x2,** is best (for example, in terms of image quality). Learning comprises minimizing the following loss:

$\ell(\mathbf{s1},\mathbf{s2},y)=\max(0,-y^*(\mathbf{s1}-\mathbf{s2})+m)$, where $m$ is the margin, and y=1 if y1 > y2, otherwise y = -1.

This loss function was initially introduced in 'RankIQA' by Liu, Xialei, Joost Van De Weijer, and Andrew D. Bagdanov, "Rank-IQA: Learning from rankings for no-reference image quality assessment", Proceedings of the IEEE International Conference on Computer Vision, 2017.

In temperature-based Bradley-Terry sigmoid, the objective is to minimize the difference between the predicted probability of **x1** to be better, and the ground truth probability of **x1** to be better.

The predicted probability of **x1** to be 'better' (i.e. of better quality) corresponds to the Bradley-Terry sigmoid model:

$$\hat{p}(x_1 \text{wins}) = \frac{1}{1 + \exp(-(s_1 - s_2)/T)}$$

where $T$ is the temperature. Learning then involves of minimizing the following loss:

$$\ell = \|\hat{p}(x_1 \text{wins}) - p(x_1 \text{wins})\|_2^2$$

The Elo ranking (see Jinjin Gu, Haoming Cai, Haoyu Chen, Xiaoxing Ye, Jimmy Ren, Chao Dong, "PIPAL: a Large-Scale Image Quality Assessment Dataset for Perceptual image Restoration", European Conference on Computer Vision, 2020) can also be used to consider the MOS and leveraged for computing:

$$p(x_1 \text{wins}) = \frac{1}{1 + 10^{-(y_1 - y_2)/M}}$$

where M=400 as defined in the Elo ranking.

This loss function was initially introduced in PieAPP (see Ekta Prashnani, Hong Cai, Yasamin Mostofi, Pradeep Sen, "PieAPP: Perceptual Image-Error Assessment through Pairwise Preference", Computer Vision and Pattern Recognition, 2018) and has been slightly adapted for use in the method described herein (i.e., by adding temperature and computing the ground truth with Elo).

In some embodiments of the present approach, regularizers are derived based on Pearson and Spearman correlation coefficients.

One component of the present approach involves modification of previous loss functions for model training. Additional loss terms (correlation regularizers) can be used in order to improve model accuracy.

Taking IQA models as an example, in this particular case, model evaluation is often performed by measuring Pearson and Spearman correlation coefficients. In previous model training formulations, only pairwise comparisons are performed. This ignores the "global" view of image set rankings that correlation coefficients measure.

In preferred embodiments of the present invention, the Pearson and Spearman correlation coefficients are configured to be differentiable to integrate them in the loss function.

Take a dataset:

$$\{(x_i, y_i), \cdots, (x_n, y_n)\}$$

of $n$ pairs, which correspond to a predicted score x and a ground truth score y. Here, x is the output of the model and y is the MOS target.

The Pearson correlation coefficient r is defined as the covariance of x and y divided by the product of their standard deviations:

$$p = \frac{cov(X,Y)}{\sigma_X \sigma_Y} = \frac{\sum x_i y_i - n\bar{x}\bar{y}}{\sqrt{\sum x_i^2 - n\bar{x}^2}\sqrt{\sum y_i^2 - n\bar{y}^2}},$$

where $\bar{x}$ and $\bar{y}$ are the sample mean for x and y respectively. From this definition, we can derive a regularizer at the batch-level (i.e., compute the Pearson correlation for the mini-batch):

$$R_p = \|1 - p\|_p,$$

where $\|\cdot\|p$ is the p-norm.

The Spearman correlation coefficient is similar to the Pearson correlation coefficient but considers the ranks of x and y instead of the raw values:

$$S = \frac{cov(rg_X, rg_Y)}{\sigma_{rg_X} \sigma_{rg_Y}} = 1 - \frac{6\sum d_i^2}{n(n^2 - 1)},$$

where:

$$d_i = rg(x_i) - rg(y_i).$$

Formally, the rank is defined as:

$$rg(x) = 1 + \sum_{j \neq i} I\{(x_i - x_j) < 0\},$$

where $I\{.\}$ is the indicator function. As the Spearman correlation coefficient relies on the indicator function to compute ranks, it makes the formulation non-differentiable. Following the approach in Andrew Brown, Weidi Xie, Vicky Kalogeiton, Andrew Zisserman, "Smooth-AP: Smoothing the Path Towards Large-Scale Image Retrieval", European Conference on Computer Vision, 2020, the indicator function can be approximated with a temperature-based sigmoid:

$$I\{(x_i - x_j) < 0\} \approx \frac{1}{1 + \exp((x_i - x_j)/T)},$$

where T is typically set to 0.01. This approximation can then be substituted in rg(x) to make the Spearman correlation differentiable. From this definition, a regularizer can be derived at the batch-level (i.e., compute the Spearman correlation for the mini-batch):

$$R_s = \|1 - s\|_p,$$

where $\|\cdot\|_p$ is the p-norm.

The final loss function then becomes:

$$\ell = \|\hat{p}(x_1 \text{ wins}) - p(x_1 \text{ wins})\|_2^2 + \lambda_p R_p + \lambda_s R_s.$$

In summary, the Pearson and Spearman correlations, used as exemplary instantiations, are made to be differentiable in order to allow their integration into the model training loss function. Intuitively, the modified loss provides additional signal to the model about global image ranking information, not visible in previous only pair-wise image loss considerations.

The above description illustrates how a model compares model predicted scores vs. ground-truth scores (the latter available from labelled training data).

Below is provided an overview for the model architecture and how the model predicted scores are generated.

Consider the image tuple (**ref**, x^i), where x^i is the ith distortion of a reference image **ref.** In other words, **ref** and x^i display the same semantic image content but with different image quality.

The objective of the task is to learn a function $f$ to compute a quality score $s\_i = f$ (**ref**, x^i). In an exemplary implementation, $f$ corresponds to a neural network learnable model (specifically, for example, the LPIPS network proposed in Richard Zhang, Phillip Isola, Alexei A. Efros, Eli Shechtman, Oliver Wang, "The Unreasonable Effectiveness of Deep Features as a Perceptual Metric", Computer Vision and Pattern Recognition, 2018).

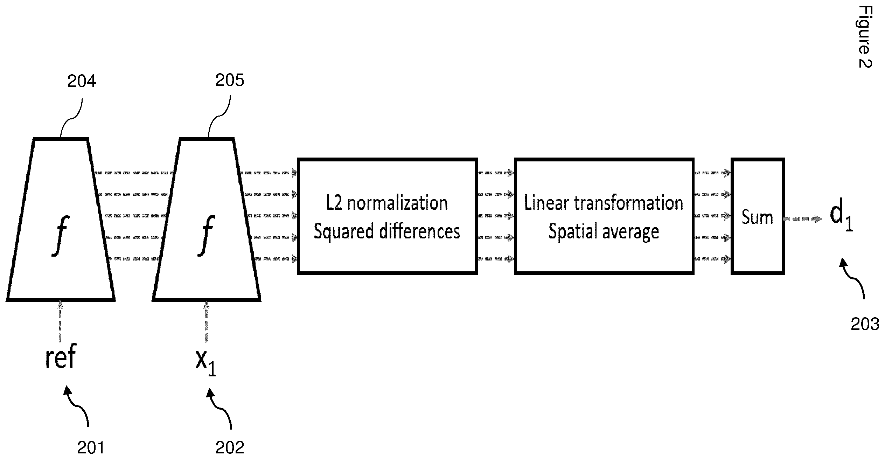

Figure 2 provides a schematic showing how the perceptual quality algorithm uses network $f$ in order to derive scalar rating d1 for image x1.

Given a reference image ref, 201, and a distorted version x1, 202, a scalar score d1, 203, is obtained by subtracting image feature representations at different levels. Intuitively, the differences are measured between image versions ref, x1 in various spaces (latent image representations).

More specifically, in this example, the algorithm comprises the steps of:

- Extracting image features for ref and x1 at five different levels (other levels are possible). This is shown generally at 204 and 205 for the images 201 and 202 respectively.
- The extracted image features are L2 normalized.
- A squared difference is computed between features for all levels. For example, $(F^L(ref) - F^L(x1))^2$ for the features at level L
- A learned linear transformation is applied to the features to map them into one channel
- A spatial average is applied to output scalar value for all levels.
- A sum is applied to end up with a scalar value d1 at 203.

The previous section described an overview of how to obtain scalar scores from sample data unit inputs using a learnable model (such as a neural network).

Described below is how the pairs of data units are selected for use in the model during network training.

The examples below are described for the IQA application, taking a plurality of images as input for the training. However, the approach is also applicable to data units that are not images.

To learn the function, a pairwise learning scheme is used. Consider a pair of tuples (ref^n, x^n_i) and (ref^m, x^m_j) where there are no constraints regarding m and $n$ nor $i$ and $j$. In other words, the pair can include different reference images (i.e., $m \neq n$), as well different distortions (i.e., $i \neq j$). For simplicity, s1 and s2 are referred to as pair 1 and pair 2, respectively. It is then learned which one of the tuples is of better image quality.

This formulation differs from that used in previous works, which typically impose constraints on either (m and $n$) or ($i$ and $j$) (for example, PieAPP or RankIQA).

Therefore, in the present approach, instead of comparing two distorted images coming from one reference image, two distorted images coming from two different reference images are compared. This allows to create many more pairs than previous sampling strategies, during model training. This in turn affords to provide more 'training signal' to the model, which may improve the performance of the model.

In a previous naïve setting, sampling strategy for pairs of images are fixed. Concretely, a sample in the training mini-batch comprises the triplet (ref^i , x"i_1 , x^i_2) where the i-th reference images, and x^i_1 and x^i_2 are two different distorted images originating from ref^i and randomly sampled.

During training, the following are then compared:

$$s1 = f(ref^i , x^i\_1) \text{ and } s2 = f(ref^i, x^i\_2)$$

This sampling strategy is limited, as only a small number of pairs are seen at every training iteration. This may particularly hurt the pairwise ranking loss, as when a pair is positive it is effectively useless, as it does not provide any gradient (i.e. training signal to the neural network model, allowing it to iteratively improve).

Instead of having the previously discussed artificial constraint of comparing two distorted images originating from the same reference image, in a preferred embodiment of the present invention, more flexibility in the setting can be introduced by comparing two distorted images originating from two different reference images. This is referred to herein as "batch all" sampling.

During training, the following are compared:

$$s1 = f(ref^i , x^i) \text{ and } s2 = f(ref^j, x^j) \text{ with } i \neq j$$

Relaxing the constraints allows to use this "batch all" sampling. This involves building all possible pairs in a mini-batch.

Instead of having N pairs in a mini-batch, there can now be N*N pairs in theory. In practice, there may be (N*N-N)/2 pairs, due to redundancy for some comparisons.

As pairwise comparison is performed, there is no need to score both: that s1 is better (s1>s2) and that s2 is worse (s2<s1). Scoring one of the two is enough, as this is redundant information.

As an example, consider a training batch size of 16. 16 distorted images and 16 reference images are fed to the network. From this input, 120 pairs can be built. As a comparison, with a traditional naïve sampling strategy (used in previous works), this would result in 2x16 distorted images and 16 reference images, for a total of only 16 pairs.

Some illustrative examples will now be provided of how the sampling strategy used in embodiments of the present invention differs from previous approaches.

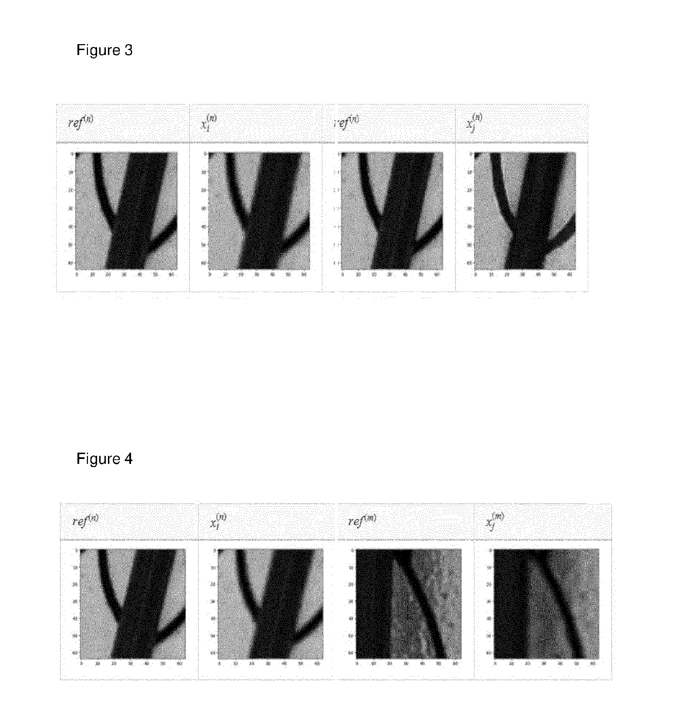

Figure 3 shows a comparison between the images (ref^n, x^n_i) and (ref^n, x*n_j), where x^n_i and x^n_j originate from the same ref^n image (currently the standard IQA approach). This is referred to as a same pair comparison.

Figure 4 shows a comparison between the images (ref^n, x^n_i) and (ref^m, x^m_j) where n and m, as well as i and j, can be disparate. This is referred to as an any pair comparison.

Once the image pairs have been defined, there are then multiple ways to collate them into mini-batches for model training.

In a preferred implementation, pairs in the mini-batch (comprising pairs 1-N) are fixed. This is typically used for the same image pairs. In this context, a triplet is input to the model:

$$\{(ref^{(n)}, x_i^{(n)}, x_j^{(n)})\}_{n=1}^{N}$$

where $i \neq j$ indicates the distortion type and N is the batch size.

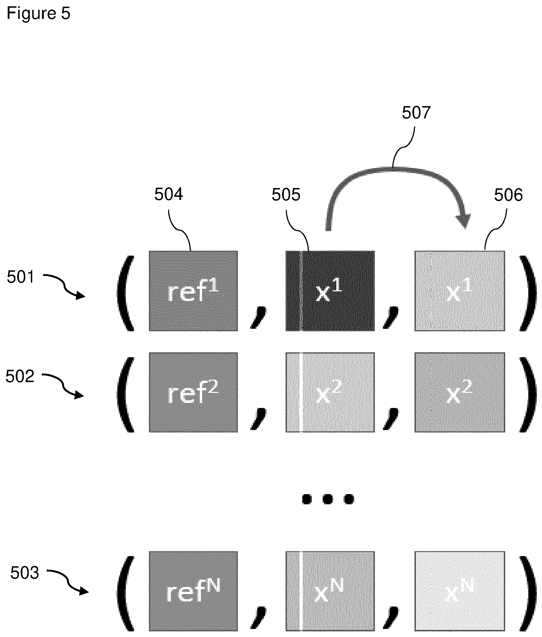

Figure 5 shows a schematic illustration of a batch fixed with the same pair. Given a mini-batch of size N, N triplets indicated at 501-503 are input to the model that provide N pairwise comparisons. In each triplet, there is a reference image and two distorted versions of this reference image. For triplet 501, the reference image ref[1] is shown at 504 and the distorted versions of the reference image, x[1], are shown at 505 and 506. For each of the N triplets, comparisons are made between the distorted images, shown at 507 for the images 505 and 506.

It is also possible to have a batch fixed with any pairs. In this context, a quadruplet is input to the network:

$$\{(ref^{(n)}, x_i^{(n)}, ref^{(m)}, x_j^{(m)})\}_{n=1, m=1}^{N}.$$

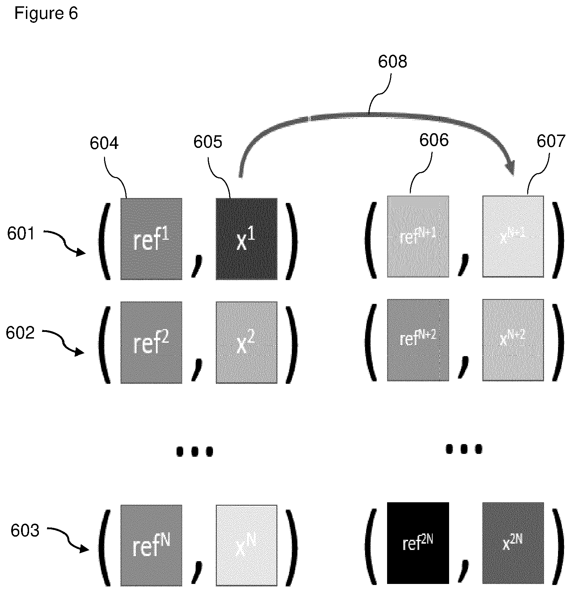

Figure 6 shows a schematic illustration of a batch fixed with any pair. Given a mini-batch of size N, N quadruplets indicated at 601-603 are input to the model that provide N pairwise comparisons. In each quadruplet, there are two pairs. Each pair comprises a reference image and one distorted version of it. For quadruplet 601, the reference image ref[1] is shown at 604 and its distorted version x[1] is shown at 605. The images 604 and 605 comprise one pair of images. The reference image ref[N+1] is shown at 606 and its distorted version x[N+1] is shown at 607. The images 606 and 607 comprise a second pair of images. For each of the N quadruplets, comparisons are made between the pairs of images, shown at 608 for the quadruplet 601.

In the batch all implementation, pairs in the mini-batch are constructed for computing the loss function. This implementation considers all possible available pairs in a mini-batch. In this context, a tuple is input to the network:

$$\{(ref^{(n)}, x_i^{(n)})\}_{n=1}^{N},$$

and then pairs are constructed by performing pairwise comparisons.

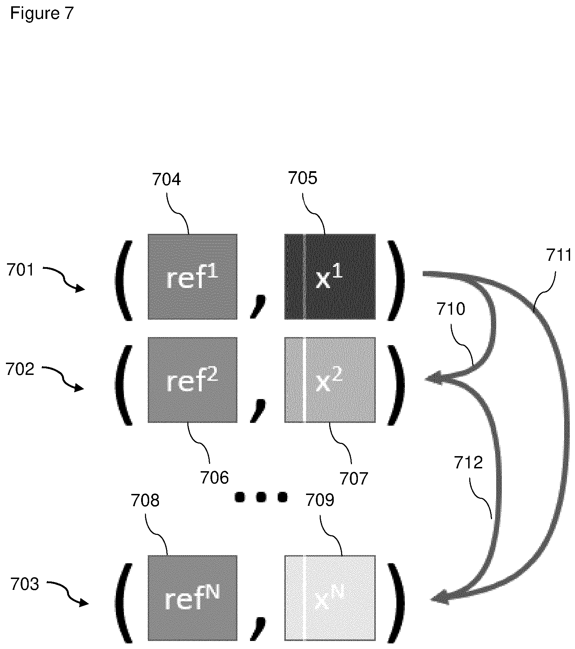

Figure 7 shows a schematic illustration of the batch all sampling method with any pair. Given a mini-batch of size $N$, $N$ pairs indicated at 701-703 are input that provide $N*N$ comparisons (theoretically, but this may be less effectively, as some comparisons are redundant). Each pair comprises a reference image and a distorted version of the reference image. For pair 701, the reference image $ref^1$ is shown at 704 and its distorted version $x^1$ is shown at 705. For pair 702, the reference image $ref^2$ is shown at 706 and its distorted version $x^2$ is shown at 707. For pair 703, the reference image $ref^N$ is shown at 708 and its distorted version $x^N$ is shown at 709. At least some of the images may be different. The images are preferably all different. $N*N$ comparisons are made. The comparison between the pair 701 and the pair 702 is shown at 710, between pair 701 and pair 702 at 711, and between pair 701 and 703 at 712. Comparisons are also made between all of the other pairs of the N pairs.

Note that in some implementations, there may be more constrained variations. For example, RankIQA initially proposed to input:

$$\{(ref^{(n)}, x_i^{(n)})\}_{i=1}^{N}$$

by fixing the ref image and providing multiple distortions of the same ref image.

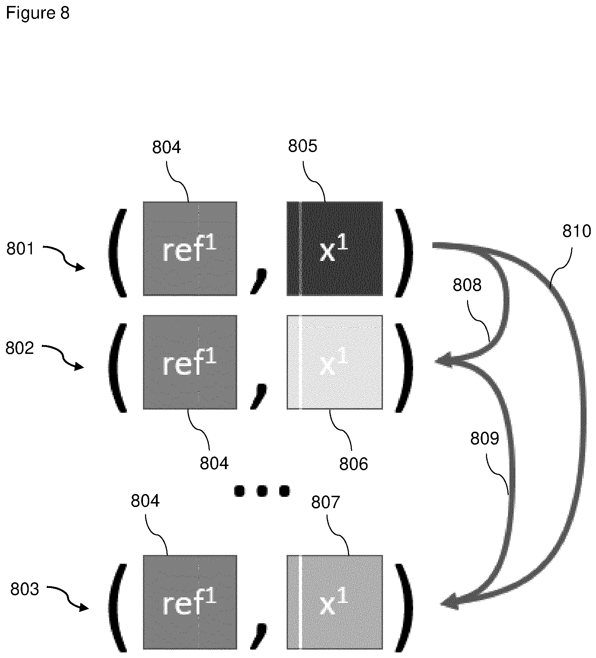

Figure 8 shows a schematic illustration of the batch all sampling method with the same reference image. Given a mini-batch of size $N$, $N$ pairs indicated at 801-803 are input that provide $N*N$ comparisons (theoretically, but this may be less effectively as some comparisons are redundant). In the mini-batch, there is only one reference image $ref^1$, shown at 804, for each of the pairs and $N$ distorted versions of it, $x^1$, shown at 805-807 for pairs 801-803 respectively. At least some of the $N$ distorted versions may be different. The $N$ distorted versions are preferably all different. The comparison between the pair 801 and the pair 802 is shown at 808, between pair 802 and pair 803 at 809, and between pair 801 and 803 at 810. Comparisons are also made between all of the other pairs of the N pairs.

The constraint is relaxed by letting the training sample different ref images and different distortions for every iteration.

Following this terminology, the framework of embodiments of the present invention relies on a batch all sampling with any pair.

The data units operated on by the network therefore represent semantically differing content and groups of the data units are selected for comparative processing, at least some of the groups comprising data units that represent semantically differing content.

The machine learning algorithm operates on multiple batches, each batch comprising a partial set of the data units.

As discussed above, the machine learning algorithm can operate in dependence on a training objective that employs first differentiable correlation coefficients configured to enforce, over a batch, a monotonic relationship between the output value of each member of the batch and its respective rating among the members of that batch. The monotonic relationship is preferably a linear relationship. As described above, the first differentiable correlation coefficients may be Pearson correlation coefficients.

The machine learning algorithm can operate in dependence on a training objective that employs second differentiable correlation coefficients configured to enforce, over a batch, rank correlation between the output value of each member of the batch and its respective rating among the members of that batch. As described above, the second differentiable correlation coefficients may be Spearman correlation coefficients.

The approach described herein may result in providing better training signals to learnable models that, downstream, result in more accurate image quality assessment (higher correlation with image mean opinion scores (MOS) ground-truth ratings).

Using this approach, images may be mapped to quantitative scalar scores on arbitrary dimensions. One such example involves quantitative scoring of images, based on subjective visual quality. Once scalars have been assigned to images, such images are then rankable in ordinal fashion using the respective scores to sort the image list.

Therefore, generally, the processing mechanism described herein processes a plurality of data units by means of a machine learning algorithm to form, for each data unit, an output value representing a rating for that data unit and a ranking of that data unit relative to the other data units of the plurality of data units.

Using the above approach, a system implementing the method is automatically able to (i.e. it can learn to) quantitatively score data units such as images on a given dimension (an example of which, image-score pairs, are seen at model training time) such that a resulting image proxy ranking can faithfully reproduce the ground-truth list ordering, in the case where original image scores are withheld, or unseen.

The trainable scoring system is capable of assigning quantitative scalar values to images (or other types of data units), based on input image appearance, where values assess images on a previously specified and learned dimension (for example, image visual quality).

Where the data units are images, image 'quality' may represent, but is not limited to, one or more of the sharpness, contrast, colour balance, blur, noise, haze and subject of an image.

The image quality can also represent the presence of distortions coming from machine learning models. For example, a machine learning model can be used to super-resolve an image and this can create distortions in the super-resolved image. Such software-induced artifacts can be included in the definition of image quality for a particular image.

Although the assessment of an image is described in the above examples, the plurality of data units may alternatively be of the form of video files, text files, audio files or any other data units for which it is desired to form an output value representing a rating for that data unit and a ranking of that data unit relative to the other data units. The data units are preferably perceptual data units that may be interpreted by one or more of the human senses.

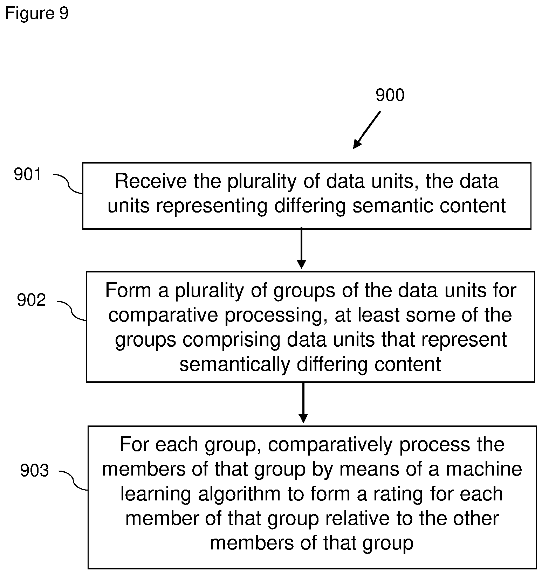

Figure 9 summarises an example of the steps performed by a processing mechanism for assessing the plurality of data units. At step 901, the mechanism comprises receiving the plurality of data units, the data units representing differing semantic content. At step 902, the method comprises forming a plurality of groups of the data units for comparative processing, at least some of the groups comprising data units that represent semantically differing content. At step 903, the method comprises, for each group, comparatively processing the members of that group by means of a machine learning algorithm to form a rating for each member of that group relative to the other members of that group.

The rating may be based on a scalar output from the model for each of the data units. As discussed above, the scalar output for a data unit may represent the quality of that data unit, such as image quality, or the quality of an audio, video, or text file.

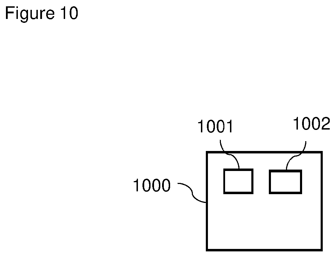

Figure 10 shows a schematic diagram of a device 1000 configured to implement the mechanisms described above and its associated components. The device may comprise a processor 1001 and a non-volatile memory 1002. The device may comprise more than one processor and more than one memory. The memory may store data that is executable by the processor. The processor may be configured to operate in accordance with a computer program stored in non-transitory form on a machine readable storage medium. The computer program may store instructions for causing the processor to perform its methods in the manner described herein. The components may be implemented in physical hardware or may be deployed on various edge or cloud devices.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. A processing mechanism (1000) for assessing a plurality of data units (201, 202), the processing mechanism comprising one or more processors (1001) configured to process the data units by means of a machine learning algorithm and thereby form, for each data unit, an output value (203) representing both (i) a rating for that unit and (ii) a ranking of that unit relative to the other data units of the plurality of data units,

   wherein the machine learning algorithm operates on multiple batches, each batch comprising a partial set of the data units,
   wherein the machine learning algorithm operates in dependence on a training objective that employs first differentiable correlation coefficients configured to enforce, over a batch, a monotonic relationship between the output value of each member of the batch and its respective rating among the members of that batch, wherein the machine learning algorithm operates in dependence on a training objective that employs second differentiable correlation coefficients configured to enforce, over a batch, rank correlation between the output value of each member of the batch and its respective rating among the members of that batch, and
   wherein the data units are image files, video files, text files or audio files.

**2.** A processing mechanism as claimed in claim 1, wherein the data units represent semantically differing content and the one or more processors are configured to, as part of the algorithm, select groups of the data units for comparative processing, at least some of the groups comprising data units that represent semantically differing content.

**3.** A processing mechanism as claimed in claim 1, wherein the monotonic relationship is a linear relationship.

**4.** A processing mechanism as claimed in claim 1 or 3 wherein the first differentiable correlation coefficients are Pearson correlation coefficients.

**5.** A processing mechanism as claimed in claim 1, wherein the second differentiable correlation coefficients are Spearman correlation coefficients.

**6.** A processing mechanism as claimed in claim 1, wherein the data units are image files and the ratings represent image quality.

**7.** A processing mechanism as claimed in claim 6, wherein the image quality represents one or more of sharpness, contrast, colour balance, blur, noise, haze, software-induced artifacts and subject.

**8.** A computer-implemented method for assessing a plurality of data units (201, 202), the method comprising forming, by means of a machine learning algorithm, for each data unit, an output value representing both (i) a rating for that unit and (ii) a ranking of that unit relative to the other data units of the plurality of data units,

> wherein the machine learning algorithm operates on multiple batches, each batch comprising a partial set of the data units,
> wherein the machine learning algorithm operates in dependence on a training objective that employs first differentiable correlation coefficients configured to enforce, over a batch, a monotonic relationship between the output value of each member of the batch and its respective rating among the members of that batch, wherein the machine learning algorithm operates in dependence on a training objective that employs second differentiable correlation coefficients configured to enforce, over a batch, rank correlation between the output value of each member of the batch and its respective rating among the members of that batch, and
> wherein the data units are image files, video files, text files or audio files.

**9.** A processing mechanism (1000) for assessing a plurality of data units (201, 202), the processing mechanism comprising one or more processors (1001) configured to:

> receive (901) the plurality of data units, the data units representing differing semantic content;
> form (902) a plurality of groups of the data units for comparative processing, at least some of the groups comprising data units that represent semantically differing content; and
> for each group, comparatively process (903) the members of that group by means of a machine learning algorithm to form a rating for each member of that group relative to the other members of that group,
>
>> wherein the machine learning algorithm operates on multiple batches, each batch comprising a partial set of the data units,
>> wherein the machine learning algorithm operates in dependence on a training objective that employs first differentiable correlation coefficients configured to enforce, over a batch, a monotonic relationship between the output value of each member of the batch and its respective rating among the members of that batch, wherein the machine learning algorithm operates in dependence on a training objective that employs second differentiable correlation coefficients configured to enforce, over a batch, rank correlation between the output value of each member of the batch and its respective rating among the members of that batch, and
>> wherein the data units are image files, video files, text files or audio files.

**Patentansprüche**

**1.** Verarbeitungsmechanismus (1000) zum Beurteilen einer Vielzahl von Dateneinheiten (201, 202), wobei der Verarbeitungsmechanismus einen oder mehrere Prozessoren (1001) umfasst, die konfiguriert sind, um die Dateneinheiten durch einen Algorithmus eines maschinellen Lernens zu verarbeiten und dadurch für jede Dateneinheit einen Ausgabewert (203) zu bilden, der sowohl (i) eine Bewertung für diese Einheit als auch (ii) eine Rangfolge dieser Einheit, die anderen Dateneinheiten der Vielzahl von Dateneinheiten betreffend, repräsentiert,

wobei der Algorithmus des maschinellen Lernens mehrere Batches verarbeitet, wobei jeder Batch einen Teilsatz der Dateneinheiten umfasst,

wobei der Algorithmus des maschinellen Lernens in Abhängigkeit von einem Trainingsziel arbeitet, das erste differenzierbare Korrelationskoeffizienten verwendet, die konfiguriert sind, um über einen Batch hinweg eine monotone Beziehung zwischen dem Ausgabewert jedes Mitglieds des Batches und seiner jeweiligen Bewertung unter den Mitgliedern dieses Batches zu erzwingen, wobei der Algorithmus des maschinellen Lernens in Abhängigkeit von einem Trainingsziel arbeitet, das zweite differenzierbare Korrelationskoeffizienten verwendet, die konfiguriert sind, um über einen Batch hinweg eine Rangkorrelation zwischen dem Ausgabewert jedes Mitglieds des Batches und seiner jeweiligen Bewertung unter den Mitgliedern dieses Batches zu erzwingen, und wobei die Dateneinheiten Bilddateien, Videodateien, Textdateien oder Audiodateien sind.

2. Verarbeitungsmechanismus nach Anspruch 1, wobei die Dateneinheiten semantisch differenzierte Inhalte repräsentieren und der eine oder die mehreren Prozessoren konfiguriert sind, um als Teil des Algorithmus Gruppen der Dateneinheiten zum vergleichenden Verarbeiten auszuwählen, wobei mindestens einige der Gruppen Dateneinheiten umfassen, die semantisch differenzierte Inhalte repräsentieren.

3. Verarbeitungsmechanismus nach Anspruch 1, wobei die monotone Beziehung eine lineare Beziehung ist.

4. Verarbeitungsmechanismus nach Anspruch 1 oder 3, wobei die ersten differenzierbaren Korrelationskoeffizienten Pearson-Korrelationskoeffizienten sind.

5. Verarbeitungsmechanismus nach Anspruch 1, wobei die zweiten differenzierbaren Korrelationskoeffizienten Spearman-Korrelationskoeffizienten sind.

6. Verarbeitungsmechanismus nach Anspruch 1, wobei die Dateneinheiten Bilddateien sind und die Bewertungen eine Bildqualität repräsentieren.

7. Verarbeitungsmechanismus nach Anspruch 6, wobei die Bildqualität eines oder mehrere von Schärfe, Kontrast, Farbbalance, Unschärfe, Rauschen, Dunst, softwarebedingte Artefakte und Motiv repräsentiert.

8. Computerimplementiertes Verfahren zum Beurteilen einer Vielzahl von Dateneinheiten (201, 202), wobei das Verfahren ein Bilden eines Ausgabewerts, der sowohl (i) eine Bewertung für diese Einheit als auch (ii) eine Rangfolge dieser Einheit, die anderen Dateneinheiten der Vielzahl von Dateneinheiten betreffend, repräsentiert, für jede Dateneinheit durch einen Algorithmus des maschinellen Lernens umfasst,

wobei der Algorithmus des maschinellen Lernens mehrere Batches verarbeitet, wobei jeder Batch einen Teilsatz der Dateneinheiten umfasst,

wobei der Algorithmus des maschinellen Lernens in Abhängigkeit von einem Trainingsziel arbeitet, das erste differenzierbare Korrelationskoeffizienten verwendet, die konfiguriert sind, um über einen Batch hinweg eine monotone Beziehung zwischen dem Ausgabewert jedes Mitglieds des Batches und seiner jeweiligen Bewertung unter den Mitgliedern dieses Batches zu erzwingen, wobei der Algorithmus des maschinellen Lernens in Abhängigkeit von einem Trainingsziel arbeitet, das zweite differenzierbare Korrelationskoeffizienten verwendet, die konfiguriert sind, um über einen Batch hinweg eine Rangkorrelation zwischen dem Ausgabewert jedes Mitglieds des Batches und seiner jeweiligen Bewertung unter den Mitgliedern dieses Batches zu erzwingen, und wobei die Dateneinheiten Bilddateien, Videodateien, Textdateien oder Audiodateien sind.

9. Verarbeitungsmechanismus (1000) zum Beurteilen einer Vielzahl von Dateneinheiten (201, 202), wobei der Verarbeitungsmechanismus einen oder mehrere Prozessoren (1001) umfasst, die konfiguriert sind, um:

die Vielzahl von Dateneinheiten zu empfangen (901), wobei die Dateneinheiten differenzierte semantische Inhalte repräsentieren;
eine Vielzahl von Gruppen der Dateneinheiten zum vergleichenden Verarbeiten zu bilden (902), wobei mindestens einige der Gruppen Dateneinheiten umfassen, die semantisch differenzierte Inhalte repräsentieren; und für jede Gruppe die Mitglieder dieser Gruppe durch einen Algorithmus des maschinellen Lernens vergleichend zu verarbeiten (903), um für jedes Mitglied dieser Gruppe eine Bewertung, die anderen Mitglieder dieser Gruppe betreffend, zu bilden, wobei der Algorithmus des maschinellen Lernens auf mehreren Batches arbeitet, wobei jeder Batch einen Teilsatz der Dateneinheiten umfasst,

wobei der Algorithmus des maschinellen Lernens in Abhängigkeit von einem Trainingsziel arbeitet, das erste differenzierbare Korrelationskoeffizienten verwendet, die konfiguriert sind, um über einen Batch hinweg eine monotone Beziehung zwischen dem Ausgabewert jedes Mitglieds des Batches und seiner jeweiligen Bewertung unter den Mitgliedern dieses Batches zu erzwingen,

wobei der Algorithmus des maschinellen Lernens in Abhängigkeit von einem Trainingsziel arbeitet, das zweite differenzierbare Korrelationskoeffizienten verwendet, die konfiguriert sind, um über einen Batch hinweg eine Rangkorrelation zwischen dem Ausgabewert jedes Mitglieds des Batches und seiner jeweiligen Bewertung unter den Mitgliedern dieses Batches zu erzwingen, und

wobei die Dateneinheiten Bilddateien, Videodateien, Textdateien oder Audiodateien sind.

## Revendications

1. Mécanisme de traitement (1000) permettant d'évaluer une pluralité d'unités de données (201, 202), le mécanisme de traitement comprenant un ou plusieurs processeurs (1001) configurés pour traiter les unités de données au moyen d'un algorithme d'apprentissage automatique et ainsi former, pour chaque unité de données, une valeur de sortie (203) représentant à la fois (i) une note pour cette unité et (ii) un classement de cette unité par rapport aux autres unités de données de la pluralité d'unités de données,

   dans lequel l'algorithme d'apprentissage automatique fonctionne sur plusieurs lots, chaque lot comprenant un ensemble partiel des unités de données,

   dans lequel l'algorithme d'apprentissage automatique fonctionne en fonction d'un objectif d'entraînement qui utilise des premiers coefficients de corrélation différentiables configurés pour appliquer, sur un lot, une relation monotone entre la valeur de sortie de chaque membre du lot et sa note respective parmi les membres de ce lot,

   dans lequel l'algorithme d'apprentissage automatique fonctionne en fonction d'un objectif d'entraînement qui utilise des seconds coefficients de corrélation différentiables configurés pour appliquer, sur un lot, une corrélation de rang entre la valeur de sortie de chaque membre du lot et sa note respective parmi les membres de ce lot, et

   dans lequel les unités de données sont des fichiers image, des fichiers vidéo, des fichiers texte ou des fichiers audio.

2. Mécanisme de traitement selon la revendication 1, dans lequel les unités de données représentent un contenu sémantiquement différent et les un ou plusieurs processeurs sont configurés pour, dans le cadre de l'algorithme, sélectionner des groupes d'unités de données pour un traitement comparatif, au moins certains des groupes comprenant des unités de données qui représentent un contenu sémantiquement différent.

3. Mécanisme de traitement selon la revendication 1, dans lequel la relation monotone est une relation linéaire.

4. Mécanisme de traitement selon la revendication 1 ou 3, dans lequel les premiers coefficients de corrélation différentiables sont des coefficients de corrélation de Pearson.

5. Mécanisme de traitement selon la revendication 1, dans lequel les seconds coefficients de corrélation différentiables sont des coefficients de corrélation de Spearman.

6. Mécanisme de traitement selon la revendication 1, dans lequel les unités de données sont des fichiers image et les notes représentent la qualité d'image.

7. Mécanisme de traitement selon la revendication 6, dans lequel la qualité d'image représente l'un ou plusieurs de la netteté, du contraste, de l'équilibre des couleurs, du flou, du bruit, de la brume, des artefacts induits par logiciel et du sujet.

8. Procédé mis en œuvre par ordinateur permettant d'évaluer une pluralité d'unités de données (201, 202), le procédé comprenant la formation, au moyen d'un algorithme d'apprentissage automatique, pour chaque unité de données, d'une valeur de sortie représentant à la fois (i) une note pour cette unité et (ii) un classement de cette unité par rapport aux autres unités de données de la pluralité d'unités de données,

   dans lequel l'algorithme d'apprentissage automatique fonctionne sur plusieurs lots, chaque lot comprenant un ensemble partiel des unités de données,

dans lequel l'algorithme d'apprentissage automatique fonctionne en fonction d'un objectif d'entraînement qui utilise des premiers coefficients de corrélation différentiables configurés pour appliquer, sur un lot, une relation monotone entre la valeur de sortie de chaque membre du lot et sa note respective parmi les membres de ce lot, dans lequel l'algorithme d'apprentissage automatique fonctionne en fonction d'un objectif d'entraînement qui utilise des seconds coefficients de corrélation différentiables configurés pour appliquer, sur un lot, une corrélation de rang entre la valeur de sortie de chaque membre du lot et sa note respective parmi les membres de ce lot, et dans lequel les unités de données sont des fichiers image, des fichiers vidéo, des fichiers texte ou des fichiers audio.

9. Mécanisme de traitement (1000) permettant d'évaluer une pluralité d'unités de données (201, 202), le mécanisme de traitement comprenant un ou plusieurs processeurs (1001) configurés pour :

recevoir (901) la pluralité d'unités de données, les unités de données représentant un contenu sémantique différent ;
former (902) une pluralité de groupes des unités de données pour un traitement comparatif, au moins certains des groupes comprenant des unités de données qui représentent un contenu sémantiquement différent ; et
pour chaque groupe, traiter comparativement (903) les membres de ce groupe au moyen d'un algorithme d'apprentissage automatique pour former une note pour chaque membre de ce groupe par rapport aux autres membres de ce groupe, dans lequel l'algorithme d'apprentissage automatique fonctionne sur plusieurs lots, chaque lot comprenant un ensemble partiel des unités de données,
dans lequel l'algorithme d'apprentissage automatique fonctionne en fonction d'un objectif d'entraînement qui utilise des premiers coefficients de corrélation différentiables configurés pour appliquer, sur un lot, une relation monotone entre la valeur de sortie de chaque membre du lot et sa note respective parmi les membres de ce lot, dans lequel l'algorithme d'apprentissage automatique fonctionne en fonction d'un objectif d'entraînement qui utilise des seconds coefficients de corrélation différentiables configurés pour appliquer, sur un lot, une corrélation de rang entre la valeur de sortie de chaque membre du lot et sa note respective parmi les membres de ce lot, et dans lequel les unités de données sont des fichiers image, des fichiers vidéo, des fichiers texte ou des fichiers audio.

Figure 1

Figure 2

Figure 3

Figure 4

Figure 5

Figure 6

Figure 7

Figure 8

Figure 9

900

901 — Receive the plurality of data units, the data units representing differing semantic content

902 — Form a plurality of groups of the data units for comparative processing, at least some of the groups comprising data units that represent semantically differing content

903 — For each group, comparatively process the members of that group by means of a machine learning algorithm to form a rating for each member of that group relative to the other members of that group

Figure 10

1001     1002

1000

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109740667 A

**Non-patent literature cited in the description**

- **EKTA PRASHNANI** ; **HONG CAI** ; **YASAMIN MOSTOFI** ; **PRADEEP SEN**. PieAPP: Perceptual Image-Error Assessment through Pairwise Preference. *Computer Vision and Pattern Recognition*, 2018
- **LIU, XIALEI** ; **JOOST VAN DE WEIJER** ; **ANDREW D. BAGDANOV**. Rank-IQA: Learning from rankings for no-reference image quality assessment. *Proceedings of the IEEE International Conference on Computer Vision*, 2017
- **JINJIN GU** ; **HAOMING CAI** ; **HAOYU CHEN** ; **XIAOXING YE** ; **JIMMY REN** ; **CHAO DONG**. PIPAL: a Large-Scale Image Quality Assessment Dataset for Perceptual image Restoration. *European Conference on Computer Vision*, 2020
- **ANDREW BROWN** ; **WEIDI XIE** ; **VICKY KALO-GEITON** ; **ANDREW ZISSERMAN**. Smooth-AP: Smoothing the Path Towards Large-Scale Image Retrieval. *European Conference on Computer Vision*, 2020
- **RICHARD ZHANG** ; **PHILLIP ISOLA** ; **ALEXEI A. EFROS** ; **ELI SHECHTMAN** ; **OLIVER WANG**. The Unreasonable Effectiveness of Deep Features as a Perceptual Metric. *Computer Vision and Pattern Recognition*, 2018